# EUROPEAN PATENT APPLICATION

(11) **EP 4 814 445 A1**
(43) Date of publication of application: **30.09.2026**
(21) Application number: 26165363.8
(22) Date of filing: 17.03.2026
(51) Int. Cl.: G01D 5/353

(54) **OPTICAL FIBER CHARACTERISTIC MEASURING DEVICE, OPTICAL FIBER CHARACTERISTIC MEASURING METHOD, AND VARIABLE OPTICAL DELAY DEVICE**

(30) Priority: 25.03.2025 JP 2025049360
(71) Applicant: Yokogawa Electric Corporation, Musashino-shi, Tokyo 180-8750 (JP)
(72) Inventor: Suzuki, Yuta, Musashino-shi, Tokyo, 180-8750 (JP); Honma, Masayoshi, Musashino-shi, Tokyo, 180-8750 (JP); Tezuka, Shin-ichirou, Musashino-shi, Tokyo, 180-8750 (JP)
(74) Representative: Grünecker Patent- und Rechtsanwälte PartG mbB

(57) **Abstract**

An optical fiber characteristic measuring device includes a light source configured to emit laser light modulated at a predetermined modulation frequency, a photodetector configured to detect Brillouin scattered light obtained by causing the laser light to be incident on a measurement target optical fiber, and a control unit configured to perform control to change a position of a correlation peak by adjusting an amount of delay of the laser light used for detecting the laser light incident on the measurement target optical fiber or the Brillouin scattered light without changing the modulation frequency.

## Description

### BACKGROUND

### Technical Fields

The present disclosure relates to an optical fiber characteristic measuring device, an optical fiber characteristic measuring method, and a variable optical delay device. Priority is claimed on Japanese Patent Application No. 2025-049360, filed on March 25, 2025, the contents of which are incorporated herein by reference.

### Description of Related Art

In Brillouin scattered light generated by causing light to be incident on an optical fiber, the spectrum (frequency) thereof changes due to distortion of the optical fiber or change in temperature. Optical fiber characteristic measuring devices utilizing such properties measure a distortion distribution or a temperature distribution in a length direction of an optical fiber by detecting change in the frequency of Brillouin scattered light (Brillouin frequency shift: BFS) in the length direction of the optical fiber.

Brillouin optical correlation domain reflectometry (BOCDR) type devices, Brillouin optical correlation domain analysis (BOCDA) type devices, and the like are known as representative examples of such optical fiber characteristic measuring devices. Japanese Patent No. 6773091 discloses a BOCDR-type optical fiber characteristic measuring device capable of shortening the time required for measurement.

Incidentally, in the optical fiber characteristic measuring device described above, a position z of a measurement point (position of a correlation peak), at which distortion or the temperature of an optical fiber is measured, is determined by a modulation frequency fₘ of laser light incident on the optical fiber. Meanwhile, the modulation frequency fₘ of laser light is one of parameters for determining a spatial resolution Δz of the optical fiber characteristic measuring device. For this reason, if the modulation frequency fₘ is changed in order to change the position z of the measurement point, the spatial resolution Δz changes.

In order to maintain a constant spatial resolution Δz, there is a need to change other parameters (for example, a modulation amplitude Δf of a drive signal applied to a semiconductor laser) determining the spatial resolution Δz in accordance with change in the modulation frequency fₘ. However, since it is not possible to freely change other parameters in accordance with change in the modulation frequency fₘ, there is a limit to control of the spatial resolution Δz by changing other parameters.

The modulation frequency fₘ can be changed by changing a drive current applied to the semiconductor laser. However, if the drive current is changed in order to change the modulation frequency fₘ, a phase difference between the drive current and laser light output from the semiconductor laser changes, which causes a problem in performing stable measurement. In this manner, in the related art, measurement was performed by changing the modulation frequency fₘ, but changing the modulation frequency fₘ caused various disadvantages.

The present disclosure has been made in consideration of the foregoing circumstances, and an object thereof is to provide an optical fiber characteristic measuring device, an optical fiber characteristic measuring method, and a variable optical delay device capable of performing measurement while changing a position of a measurement point without changing a modulation frequency of laser light.

### SUMMARY

In order to resolve the foregoing problems, an optical fiber characteristic measuring device (1, 1A, 2, 2A) according to a first aspect of the present disclosure includes a light source (11a) emitting laser light (L1) modulated at a predetermined modulation frequency (fₘ), a photodetector (18) detecting Brillouin scattered light (LS) obtained by causing the laser light to be incident on a measurement target optical fiber (FUT), and a control unit (22) performing control to change a position of a correlation peak (PK) by adjusting an amount of delay of the laser light (L1) used for detecting the laser light (P, Pr, Pp) incident on the measurement target optical fiber or the Brillouin scattered light without changing the modulation frequency.

In addition, according to the optical fiber characteristic measuring device of a second aspect of the present disclosure, the optical fiber characteristic measuring device according to the first aspect may further include a variable optical delay device (14) provided on an optical path of the laser light used for detecting the laser light incident on the measurement target optical fiber or the Brillouin scattered light. The control unit may perform control to change the position of the correlation peak by adjusting the amount of delay of the variable optical delay device.

In addition, according to the optical fiber characteristic measuring device of a third aspect of the present disclosure, in the optical fiber characteristic measuring device according to the second aspect, the variable optical delay device may include n (n is an integer equal to or larger than 2) modules (30) subjected to cascade connection with a switchable amount of delay. The control unit may adjust the amount of delay of the variable optical delay device by switching the amount of delay of each of the modules.

In addition, according to the optical fiber characteristic measuring device of a fourth aspect of the present disclosure, in the optical fiber characteristic measuring device according to the third aspect, each of the modules may include a plurality of optical fibers (32) having lengths different from each other, and an optical switch (31) switching the optical fiber of the plurality of optical fibers allowing the laser light to pass therethrough.

In addition, according to the optical fiber characteristic measuring device of a fifth aspect of the present disclosure, in the optical fiber characteristic measuring device according to the fourth aspect, each of the modules may be provided with the p (p is an integer equal to or larger than 2) optical fibers. When a minimum spatial resolution of the measurement target optical fiber in a length direction is Δz, an optical path length L(i,j) of the jth (j is an integer satisfying 0≤j≤p-1) optical fiber provided in the ith (i is an integer satisfying 0≤i≤n-1) module may be expressed by the following expression.$L \left(i, j\right) = {p}^{i} ⋅ j ⋅ Δz + L \left(i, 0\right)$

In addition, according to the optical fiber characteristic measuring device of a sixth aspect of the present disclosure, in the optical fiber characteristic measuring device according to the fourth or fifth aspect, the sum of maximum optical path length differences of the optical fibers in each of the modules may be longer than twice a length (L_{FUT}) of the measurement target optical fiber.

In addition, according to the optical fiber characteristic measuring device of a seventh aspect of the present disclosure, in the optical fiber characteristic measuring device according to the fourth or fifth aspect, the sum of maximum optical path length differences of the optical fibers in each of the modules may be longer than twice an interval (dₘ) between the correlation peaks.

In addition, according to the optical fiber characteristic measuring device of an eighth aspect of the present disclosure, the optical fiber characteristic measuring device (1, 1A) according to any one of the first to seventh aspects may further include a first optical splitter (12) splitting the laser light into pump light (LP) and reference light (LR), and a second optical splitter (16) causing the pump light to be incident from one end of the measurement target optical fiber and outputting the Brillouin scattered light generated inside the measurement target optical fiber. The photodetector may detect coherent light between the Brillouin scattered light and the reference light, and the control unit may perform control to change the position of the correlation peak by adjusting the amount of delay of the pump light or the reference light.

In addition, according to the optical fiber characteristic measuring device of a ninth aspect of the present disclosure, the optical fiber characteristic measuring device (2, 2A) according to any one of the first to seventh aspects may further include a third optical splitter (41) splitting the laser light into pump light (Pp) and probe light (Pr), a shifter (42) shifting a frequency of the pump light or the probe light, and a fourth optical splitter (45) causing the pump light to be incident from one end of the measurement target optical fiber and outputting the probe light which has been incident from the other end of the measurement target optical fiber and has passed through the measurement target optical fiber and the Brillouin scattered light generated inside the measurement target optical fiber. The photodetector may detect the probe light and the Brillouin scattered light output from the fourth optical splitter, and the control unit may perform control to change the position of the correlation peak by adjusting the amount of delay of the pump light or the probe light.

In addition, according to the optical fiber characteristic measuring device of a tenth aspect of the present disclosure, the optical fiber characteristic measuring device (1, 1A, 2, 2A) according to any one of the first to ninth aspects may further include a processing unit (21) obtaining a Brillouin gain spectrum from a detection signal output from the photodetector, and measuring characteristics of the measurement target optical fiber on the basis of the Brillouin gain spectrum.

An optical fiber characteristic measuring method according to another aspect of the present disclosure has a step of emitting laser light (L1) modulated at a predetermined modulation frequency (fₘ) (S13), a step of detecting Brillouin scattered light (LS) obtained by causing the laser light to be incident on a measurement target optical fiber (FUT) (S16), and a step of performing control to change a position of a correlation peak (PK) by adjusting an amount of delay of the laser light (L1) used for detecting the laser light (P, Pr, Pp) incident on the measurement target optical fiber or the Brillouin scattered light without changing the modulation frequency (S20).

A variable optical delay device (14) according to another aspect of the present disclosure includes n (n is an integer equal to or larger than 2) modules (30) subjected to cascade connection with a switchable amount of delay of light. Each of the modules includes p (p is an integer equal to or larger than 2) optical fibers (32) having lengths different from each other, and an optical switch (31) switching the optical fiber of the p optical fibers allowing light to pass therethrough. When a predetermined reference length is Δz, an optical path length L(i,j) of the jth (j is an integer satisfying 0≤j≤p-1) optical fiber provided in the ith (i is an integer satisfying 0≤i≤n-1) module is expressed by the following expression. $L \left(i, j\right) = {p}^{i} ⋅ j ⋅ Δz + L \left(i, 0\right)$

According to the present disclosure, there is an effect allowing measurement to be performed while changing a position of a measurement point without changing a modulation frequency of laser light.

Further features and aspects of the present disclosure will become apparent from the following detailed description of exemplary embodiments with reference to the attached drawings.

### BRIEF DESCRIPTION OF THE DRAWINGS

FIG. 1 is a block diagram showing a constitution of a main part of an optical fiber characteristic measuring device according to a first embodiment of the present disclosure.
FIG. 2 is a block diagram showing a constitution of a main part of a variable optical delay device according to the first embodiment of the present disclosure.
FIG. 3A and FIG. 3B are views schematically showing correlation peaks according to the first embodiment of the present disclosure.
FIG. 4 is a flowchart showing an example of operation of the optical fiber characteristic measuring device according to the first embodiment of the present disclosure.
FIG. 5 is a block diagram showing a modification example of an optical fiber characteristic measuring device according to the first embodiment of the present disclosure.
FIG. 6 is a block diagram showing a constitution of a main part of an optical fiber characteristic measuring device according to a second embodiment of the present disclosure.
FIG. 7 is a block diagram showing a modification example of an optical fiber characteristic measuring device according to the second embodiment of the present disclosure.
FIG. 8 is a block diagram showing a constitution of a main part of the variable optical delay device according to a third embodiment of the present disclosure.

### DETAILED DESCRIPTION OF THE EMBODIMENTS

Hereinafter, an optical fiber characteristic measuring device, an optical fiber characteristic measuring method, and a variable optical delay device according to embodiments of the present disclosure will be described in detail with reference to the drawings.

### [First embodiment]

### <Optical fiber characteristic measuring device>

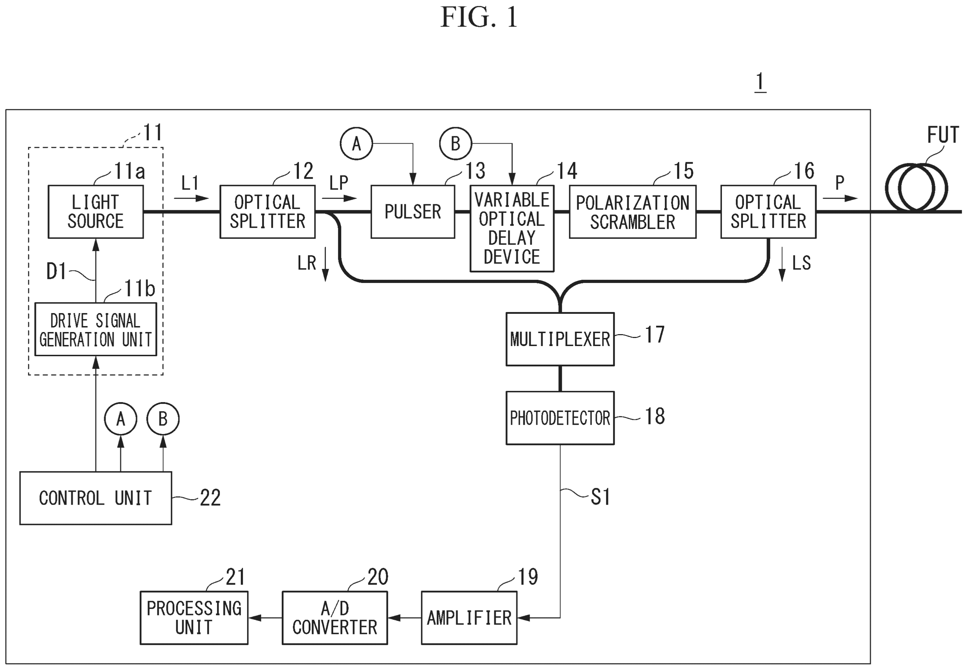

FIG. 1 is a block diagram showing a constitution of a main part of an optical fiber characteristic measuring device according to a first embodiment of the present disclosure. As shown in FIG. 1, an optical fiber characteristic measuring device 1 of the present embodiment includes a light source unit 11, an optical splitter 12 (first optical splitter), a pulser 13, a variable optical delay device 14, a polarization scrambler 15, an optical splitter 16 (second optical splitter), a multiplexer 17, a photodetector 18, an amplifier 19, an A/D converter 20, a processing unit 21, and a control unit 22.

The optical fiber characteristic measuring device 1 of the present embodiment is an optical fiber characteristic measuring device based on a so-called BOCDR method, measuring characteristics of a measurement target optical fiber FUT on the basis of Brillouin scattered light LS obtained by causing pump pulse light P to be incident on the measurement target optical fiber FUT. The foregoing pump pulse light P is pulsed pump light LP (continuous light) to which frequency modulation has been applied. In addition, the foregoing Brillouin scattered light LS is backscattered light generated due to Brillouin scattering inside the measurement target optical fiber FUT.

Any measurement target optical fiber FUT can be used in accordance with the wavelength or the like of the pump pulse light P.

The light source unit 11 includes a light source 11a and a drive signal generation unit 11b, and outputs laser light L1 subjected to frequency modulation under the control of the control unit 22. For example, the light source 11a includes a semiconductor laser element such as a distributed feedback laser diode (DFB-LD), and outputs the laser light L1 subjected to frequency modulation in response to a drive signal D1 output from the drive signal generation unit 11b.

Under the control of the control unit 22, the drive signal generation unit 11b generates the drive signal D1 for outputting the laser light L1 subjected to frequency modulation from the light source 11a. Specifically, the drive signal generation unit 11b generates the drive signal D1 by adding a DC bias current and a sinusoidal AC current. This drive signal D1 is a sinusoidal signal, and its frequency (modulation frequency fₘ) is defined by control of the control unit 22.

The optical splitter 12 splits the laser light L1 output from the light source unit 11 into the pump light LP and reference light LR having an intensity ratio (for example, 1:1) which has been defined in advance. Under the control of the control unit 22, the pulser 13 pulses the pump light LP split by the optical splitter 12. Such a pulser 13 is provided in order to obtain the pump pulse light P used in a time gating method.

Under the control of the control unit 22, the variable optical delay device 14 delays the pump light LP (pump pulse light P) pulsed by the pulser 13. The amount of delay of the variable optical delay device 14 is variable, and the amount of delay thereof is adjusted by the control of the control unit 22. For example, the variable optical delay device 14 includes a plurality of optical fibers having different lengths. The delay time of the pump pulse light P can be adjusted by switching the optical fibers through which the pump pulse light P passes. Such a variable optical delay device 14 is provided in order to change a position z of a measurement point (position of a correlation peak) at which characteristics of the measurement target optical fiber FUT are measured without changing the modulation frequency fₘ. Details of the variable optical delay device 14 will be described below.

The polarization scrambler 15 randomly changes the polarization state of the pump pulse light P which has passed through the variable optical delay device 14 over time. This is done in order to curb fluctuation in a Brillouin gain spectrum which depends on relative polarization states of the Brillouin scattered light LS obtained by causing the pump pulse light P to be incident on the measurement target optical fiber FUT and the reference light LR.

The optical splitter 16 includes a first port, a second port, and a third port. The first port is connected to the polarization scrambler 15. The second port is connected to the measurement target optical fiber FUT. The third port is connected to the multiplexer 17. The optical splitter 16 outputs the pump pulse light P input through the first port to the second port. In addition, the Brillouin scattered light LS input from the measurement target optical fiber FUT through the second port is output to the third port. For example, an optical circulator can be used as such an optical splitter 16.

The multiplexer 17 couples the Brillouin scattered light LS output through the third port of the optical splitter 16 and the reference light LR split by the optical splitter 12 to each other. In addition, the multiplexer 17 splits coupled light into two rays of light at an intensity ratio (for example, 1:1) which has been defined in advance and outputs them to the photodetector 18. Each of the two rays of light split by the multiplexer 17 contains, for example, 50% of backscattered light from the measurement target optical fiber FUT and 50% of the reference light. For example, an optical coupler can be used as such a multiplexer 17.

The photodetector 18 performs optical heterodyne detection by causing interference between the Brillouin scattered light LS and the reference light LR contained in the two rays of light output from the multiplexer 17. For example, the photodetector 18 includes balanced photodiodes constituted of two photodiodes (PDs) and a multiplexer (both not shown). The photodiodes respectively receive the two rays of light output from the multiplexer 17. Light reception signals of the photodiodes are input to the multiplexer. A detection signal S1 that is an interference signal (beat signal) indicating a frequency difference between the Brillouin scattered light LS and the reference light LR is output from the multiplexer.

The amplifier 19 amplifies the detection signal S1 output from the photodetector 18 at a predetermined amplification rate. The detection signal S1 output from the photodetector 18 is a signal containing a frequency component of approximately 10 GHz. For this reason, a high-frequency(RF) amplifier can be used as the amplifier 19. The A/D converter 20 converts the detection signal S1 amplified by the amplifier 19 into a digital signal.

The processing unit 21 obtains a Brillouin gain spectrum on the basis of the component converted into a digital signal by the A/D converter 20. The processing unit 21 measures the characteristics of the measurement target optical fiber FUT on the basis of the obtained Brillouin gain spectrum. For example, the processing unit 21 obtains a Brillouin frequency shift (BFS) of the Brillouin gain spectrum and converts the amount of this Brillouin frequency shift into a magnitude of distortion applied to the measurement target optical fiber FUT or a temperature change.

The processing unit 21 takes in the component converted into a digital signal by the A/D converter 20 during a period defined by the time gating method. Accordingly, even if a plurality of correlation peaks are present in the measurement target optical fiber FUT, the characteristics of the measurement target optical fiber FUT can be measured without any problem. The processing unit 21 may obtain the Brillouin gain spectrum by performing fast Fourier transform (FFT).

The optical fiber characteristic measuring device 1 may include a display unit displaying the characteristics of the measurement target optical fiber FUT (for example, distortion distribution) measured by the processing unit 21, and the like. For example, the display unit is a liquid crystal display, an organic electro-luminescence (EL) display device, or the like.

The control unit 22 integrally controls operation of the optical fiber characteristic measuring device 1. For example, the control unit 22 controls the drive signal generation unit 11b provided in the light source unit 11 to generate the drive signal D1 for outputting the laser light L1 subjected to frequency modulation at the modulation frequency fₘ from the light source 11a. In addition, the control unit 22 controls the pulser 13 to generate the pump pulse light P from the pump light LP.

In addition, the control unit 22 performs control to change the position of the correlation peak by adjusting the amount of delay of the pump pulse light P incident on the measurement target optical fiber FUT without changing the modulation frequency fₘ. The control unit 22 adjusts the amount of delay of the pump pulse light P by adjusting the amount of delay of the variable optical delay device 14.

The reason why the control unit 22 does not change the modulation frequency fₘ is to avoid various disadvantages caused by changing the modulation frequency fₘ. Examples of disadvantages include change in a spatial resolution Δz of the optical fiber characteristic measuring device 1 in the length direction of the measurement target optical fiber FUT, and unstable measurement of the optical fiber characteristic measuring device 1.

The reason why the control unit 22 adjusts the amount of delay of the variable optical delay device 14 is to change the position of the correlation peak. In the related art, the position of the correlation peak was changed by changing the modulation frequency fₘ. However, in the present embodiment, the modulation frequency fₘ is not changed. For this reason, the position of the correlation peak is changed by adjusting the amount of delay of the variable optical delay device 14.

The processing unit 21 and the control unit 22 are realized by a hardware processor such as a central processing unit (CPU) executing a program (software) stored in a storage unit (not shown). In addition, some or all of these functional units may be realized by hardware (circuit unit; including circuitry) such as a large scale integration

(LSI), an application specific integrated circuit (ASIC), a field-programmable gate array (FPGA), or a graphics processing unit (GPU), or may be realized by software and hardware in cooperation. Since the functions of the processing unit 21 and the control unit 22 are realized by software and hardware resources in cooperation, for example, the functions can be updated, deleted, added, and the like very easily.

### <Variable optical delay device>

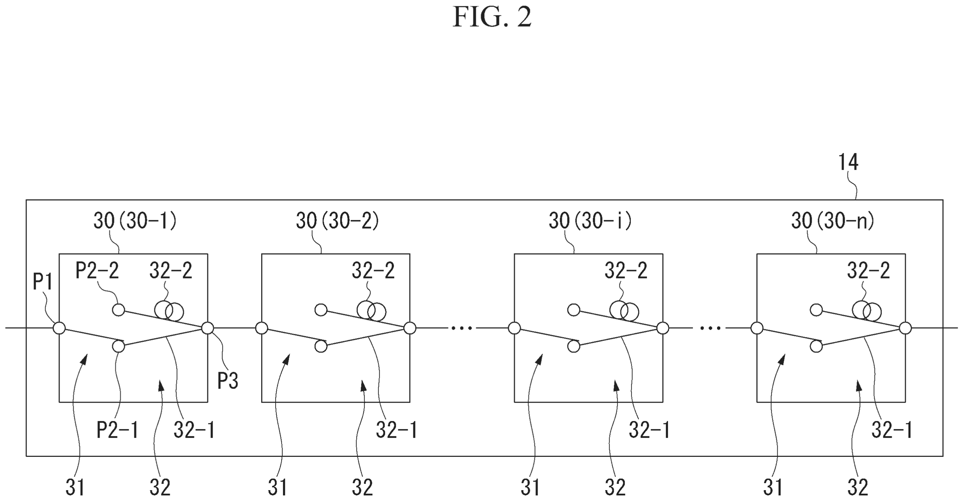

FIG. 2 is a block diagram showing a constitution of a main part of a variable optical delay device according to the first embodiment of the present disclosure. As shown in FIG. 2, the variable optical delay device 14 includes n (n is an integer equal to or larger than 2) modules 30-1 to 30-n subjected to cascade connection with a switchable amount of delay. Hereinafter, when the modules 30-1 to 30-n are collectively referred to, they will be indicated as "modules 30". The control unit 22 adjusts the amount of delay of the variable optical delay device 14 by switching the amount of delay of each of the modules 30-1 to 30-n.

The modules 30 each include an optical switch 31 and a plurality of optical fibers 32. The optical switch 31 includes one input port P1 and two output ports P2-1 and P2-2. The input port P1 of the optical switch 31 also serves as the input port of the module 30. Under the control of the control unit 22, the optical switch 31 switches the output port of the two output ports P2-1 and P2-2 connected to the input port P1.

The optical fibers 32 are optical fibers having lengths different from each other. In the example shown in FIG. 2, two optical fibers 32-1 and 32-2 are provided as the optical fibers 32. The optical fiber 32-1 is connected between the output port P2-1 of the optical switch 31 and an output port P3 of the module 30, and the optical fiber 32-2 is connected between the output port P2-2 of the optical switch 31 and the output port P3 of the module 30.

The optical fibers 32-1 and 32-2 may be of the same kind or may be of different kinds. Since the variable optical delay device 14 delays the pump pulse light P emitted from an optical modulator 13, it is preferable that the optical fibers 32-1 and 32-2 have a very small transmission loss for the pump pulse light P.

If the optical switch 31 connects the output port P2-1 to the input port P1 under the control of the control unit 22, the optical fiber 32-1 is connected between the input port P1 and the output port P3 of the module 30. If the optical switch 31 connects the output port P2-2 to the input port P1 under the control of the control unit 22, the optical fiber 32-2 is connected between the input port P1 and the output port P3 of the module 30. Namely, it can be said that the optical switch 31 is a switch for switching the optical fiber of the optical fibers 32-1 and 32-2 allowing the pump pulse light P to pass therethrough.

For example, the difference in length between the optical fibers 32-1 and 32-2 is set in consideration of the minimum spatial resolution Δz of the optical fiber characteristic measuring device 1 in the length direction of the measurement target optical fiber FUT. This is because, in the present embodiment, the position z of the measurement point (position of the correlation peak) is changed by adjusting the amount of delay of the variable optical delay device 14. In FIG. 2, for the sake of convenience, the optical fibers provided in each of the modules 30-1 to 30-n are indicated as "optical fibers 32-1 and 32-2", but it should be noted that the optical fibers 32-1 and 32-2 provided in the modules 30-1 to 30-n have lengths different from each other.

Specifically, an optical path length difference ΔLᵢ between the optical fibers 32-1 and 32-2 provided in the ith (i is an integer satisfying 0≤i≤n-1) module 30 in a direction in which the pump pulse light P passes through is expressed by the following Expression (1). ${ΔL}_{i} = {2}^{i} Δz$

In the example shown in FIG. 2, an optical path length difference ΔL₀ between the optical fibers 32-1 and 32-2 provided in the module 30-1 is Δz, and an optical path length difference ΔL₁ between the optical fibers 32-1 and 32-2 provided in the module 30-2 is 2Δz. In addition, an optical path length difference ΔLₙ between the optical fibers 32-1 and 32-2 provided in the module 30-n is 2ⁿΔz. Namely, since the ith module 30-i is the ith digit of a binary number, the amount of delay of the variable optical delay device 14 can be adjusted at intervals of the minimum spatial resolution Δz by switching the optical switch 31 of each of the modules 30.

Here, the position z of the measurement point (position of the correlation peak) at which the characteristics of the measurement target optical fiber FUT are measured is expressed by the following Expression (2). $z = - {L}_{d} / 2 + m ⋅ {d}_{m}$

In the foregoing Expression (2), when L_{d} is the length of the optical fiber delaying the pump pulse light P, and m is the order (an integer equal to or larger than zero) of the correlation peak, in addition, when dₘ is the interval between the correlation peaks, and the group velocity of light in the optical fiber is ν_{g}, it is expressed by the following Expression (3). ${d}_{m} = {ν}_{g} / 2 {f}_{m}$

From the foregoing Expression (2), it is ascertained that the position z of the measurement point changes if the length of the optical fiber L_{d} delaying the pump pulse light P changes. In the present embodiment, the position z of the measurement point is changed by switching the optical switch 31 of each of the modules 30-1 to 30-n provided in the variable optical delay device 14 to change L_{d} in the foregoing Expression (2). From the foregoing Expression (3), it is ascertained that the interval dₘ between the correlation peaks will not change unless the modulation frequency fₘ of the laser light L1 is changed.

In addition, from the foregoing Expression (2), it is ascertained that the position z of the measurement point also changes depending on an order m of the correlation peak. For this reason, if it is attempted to change the position z of the measurement point by changing the modulation frequency fₘ of the laser light L1, the amount of change in the position z of the measurement point varies depending on the order m of the correlation peak, and therefore the minimum spatial resolution becomes excessively fine for the correlation peak with a small order m of the correlation peak, requiring a long measurement time. In contrast, as in the present embodiment, when the position z of the measurement point is changed by adjusting the amount of delay of the variable optical delay device 14, the minimum spatial resolution can be set to be the same for all orders of correlation peaks, thereby speeding up the distribution measurement.

In addition, a sum Δzₘₐₓ of the optical path length differences (maximum optical path length differences) between the modules 30-1 to 30-n provided in the variable optical delay device 14 is expressed by the following Expression (4). ${Δz}_{max} = \left({2}^{n}-1\right) Δz$

Here, when the characteristics are measured throughout the entire measurement target optical fiber FUT, there is a need to move the correlation peak of the measurement target optical fiber FUT from one end to the other end. The number of modules 30 provided in the variable optical delay device 14 is determined in accordance with the distance by which the correlation peak needs to be moved.

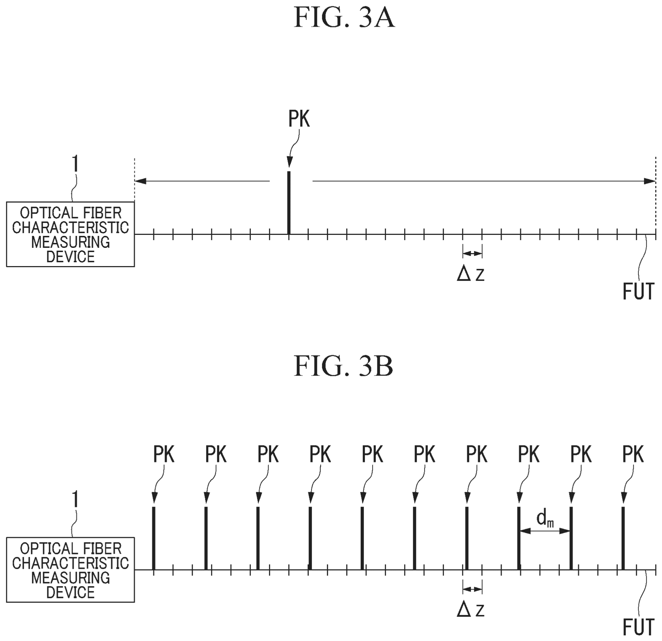

FIG. 3A and FIG. 3B are views schematically showing correlation peaks according to the first embodiment of the present disclosure. FIG. 3A is a schematic view of the case where a single correlation peak PK is generated in the measurement target optical fiber FUT, and FIG. 3B is a schematic view of the case where a plurality of correlation peaks PK are generated in the measurement target optical fiber FUT.

As shown in FIG. 3A, when the characteristics are measured throughout the entire measurement target optical fiber FUT by generating a single correlation peak PK, there is a need to move the single correlation peak PK from one end to the other end of the measurement target optical fiber FUT. In order to realize this, there is a need for the sum Δzₘₐₓ of the optical path length differences between the modules 30-1 to 30-n provided in the variable optical delay device 14 to be longer than twice a length L_{FUT} of the measurement target optical fiber FUT. For this reason, there is a need to determine the number n of modules 30 provided in the variable optical delay device 14 such that the following Expression (5) is satisfied. ${Δz}_{max} = \left({2}^{n}-1\right) Δz > 2 {L}_{FUT}$

For example, when the modulation frequency fₘ is 10 MHz, the minimum spatial resolution Δz of the optical fiber characteristic measuring device 1 is 5 cm, and the length L_{FUT} of the measurement target optical fiber FUT is 500 m, there is a need for the number n of modules 30 provided in the variable optical delay device 14 to be 15.

As shown in FIG. 3B, when the characteristics are measured throughout the entire measurement target optical fiber FUT by generating a plurality of correlation peaks PK, the correlation peaks PK may be moved by an amount corresponding to the interval dₘ between the correlation peaks PK. In order to realize this, there is a need for the sum Δzₘₐₓ of the optical path length differences between the modules 30-1 to 30-n provided in the variable optical delay device 14 to be longer than twice the interval dₘ between the correlation peaks PK. For this reason, there is a need to determine the number n of modules 30 provided in the variable optical delay device 14 such that the following Expression (6) is satisfied. ${Δz}_{max} = \left({2}^{n}-1\right) Δz > 2 {d}_{m}$

For example, when the modulation frequency fₘ is 10 MHz, the minimum spatial resolution Δz of the optical fiber characteristic measuring device 1 is 5 cm, and the interval dₘ between the correlation peaks PK is 10 m, there is a need for the number n of modules 30 provided in the variable optical delay device 14 to be 8.

### <Operation of optical fiber characteristic measuring device>

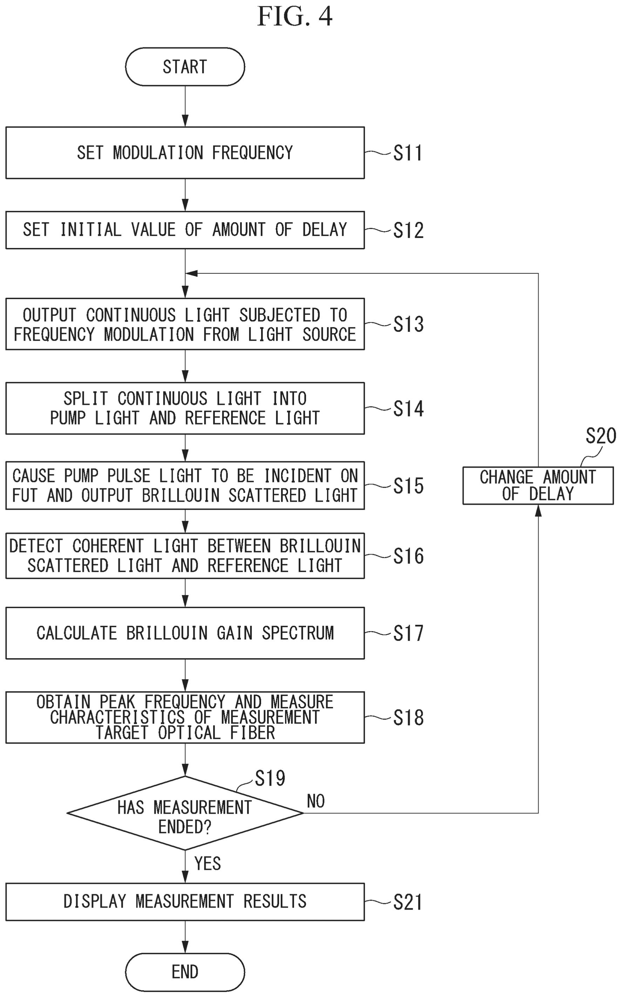

FIG. 4 is a flowchart showing an example of operation of the optical fiber characteristic measuring device according to the first embodiment of the present disclosure. The flowchart shown in FIG. 4 shows operation performed when characteristics of the measurement target optical fiber FUT in the length direction are measured. For example, the flowchart shown in FIG. 4 starts in response to an instruction to start measurement with respect to the optical fiber characteristic measuring device 1.

If the processing of the flowchart shown in FIG. 4 starts, first, the control unit 22 performs processing of setting the modulation frequency fₘ (Step S11). Since the control unit 22 does not change the modulation frequency fₘ in the middle of measuring the measurement target optical fiber FUT, the modulation frequency fₘ is set in advance prior to the measurement. Next, a control signal is output to the variable optical delay device 14 from the control unit 22, thereby performing processing of setting an initial value of the amount of delay of the variable optical delay device 14 (Step S12).

If the foregoing processing ends, a control signal is output to the drive signal generation unit 11b from the control unit 22. Consequently, the drive signal D1 is output to the light source 11a from the drive signal generation unit 11b, and the laser light L1 subjected to frequency modulation at the modulation frequency fₘ is output from the light source 11a (Step S13).

The laser light L1 output from the light source 11a is incident on the optical splitter 12 and split into the pump light LP and the reference light LR (Step S14). The split pump light LP is incident on the pulser 13 and pulsed. Accordingly, the pump pulse light P is output from the pulser 13. This pump pulse light P is delayed by the variable optical delay device 14 by the amount of delay set in Step S12, then passes through the polarization scrambler 15 and the optical splitter 16 in this order, and is incident on the measurement target optical fiber FUT.

The pump pulse light P which has been incident on the measurement target optical fiber FUT propagates inside the measurement target optical fiber FUT, and due to this, the Brillouin scattered light LS (backscattered light) is sequentially generated inside the measurement target optical fiber FUT. The Brillouin scattered light LS generated inside the measurement target optical fiber FUT propagates in a direction opposite to the direction in which the pump light LP propagates and is output from one end of the measurement target optical fiber FUT (Step S15).

The Brillouin scattered light LS output from one end of the measurement target optical fiber FUT is incident on the multiplexer 17 through the optical splitter 16, is then coupled to the reference light LR split by the optical splitter 12, and is incident on the photodetector 18. Consequently, optical heterodyne detection is performed in the photodetector 18, and the detection signal S1 that is an interference signal (beat signal) indicating a frequency difference between the Brillouin scattered light LS and the reference light LR is output from the photodetector 18 (Step S16).

The detection signal S1 output from the photodetector 18 is amplified by the amplifier 19, is then converted into a digital signal by the A/D converter 20, and is input to the processing unit 21. Consequently, the processing unit 21 performs processing of obtaining the Brillouin gain spectrum on the basis of the component converted into a digital signal (Step S17).

After the Brillouin gain spectrum is obtained, the processing unit 21 performs processing of obtaining a peak frequency of the Brillouin gain spectrum. If a frequency corresponding to the peak frequency of the Brillouin gain spectrum is obtained, the processing unit 21 performs processing of obtaining the amount of the Brillouin frequency shift from the frequency corresponding to the peak frequency. Further, the processing unit 21 performs processing of measuring the characteristics of the measurement target optical fiber FUT by converting the obtained amount of the Brillouin frequency shift into the magnitude of distortion applied to the measurement target optical fiber FUT, the temperature change, or the like (Step S18).

If the foregoing processing ends, the control unit 22 judges whether or not to end the measurement (Step S19). For example, it is judged whether or not the measurement of all the measurement points in the measurement target optical fiber FUT in the length direction has ended. When the control unit 22 judges that the measurement has not ended (when the judgment result in Step S19 is "NO"), a control signal is output to the variable optical delay device 14 from the control unit 22, and processing of changing the amount of delay of the variable optical delay device 14 is performed (Step S20). Further, the processing returns to Step S13, and the processing of Steps S11 to S18 is performed again.

In contrast, when the control unit 22 judges that the measurement has ended (when the judgment result in Step S19 is "YES"), for example, the processing unit 21 performs processing of displaying the measurement results (Step S21). For example, processing of displaying a graph (graph showing a distortion distribution) in which the horizontal axis indicates the position in the length direction of the measurement target optical fiber FUT and the vertical axis indicates the magnitude of distortion applied to the measurement target optical fiber FUT is performed. With the foregoing processing, the series of processing shown in FIG. 4 ends.

As stated above, in the present embodiment, the laser light L1 modulated at the predetermined modulation frequency fₘ is emitted to detect the Brillouin scattered light LS obtained by causing the pump pulse light P obtained by splitting the laser light L1 to be incident on the measurement target optical fiber FUT. Further, control to change the position of the correlation peak PK is performed by adjusting the amount of delay of the pump pulse light P incident on the measurement target optical fiber FUT without changing the modulation frequency fₘ. In this manner, in the present embodiment, measurement can be performed while changing the position z of the measurement point without changing the modulation frequency fₘ of laser light.

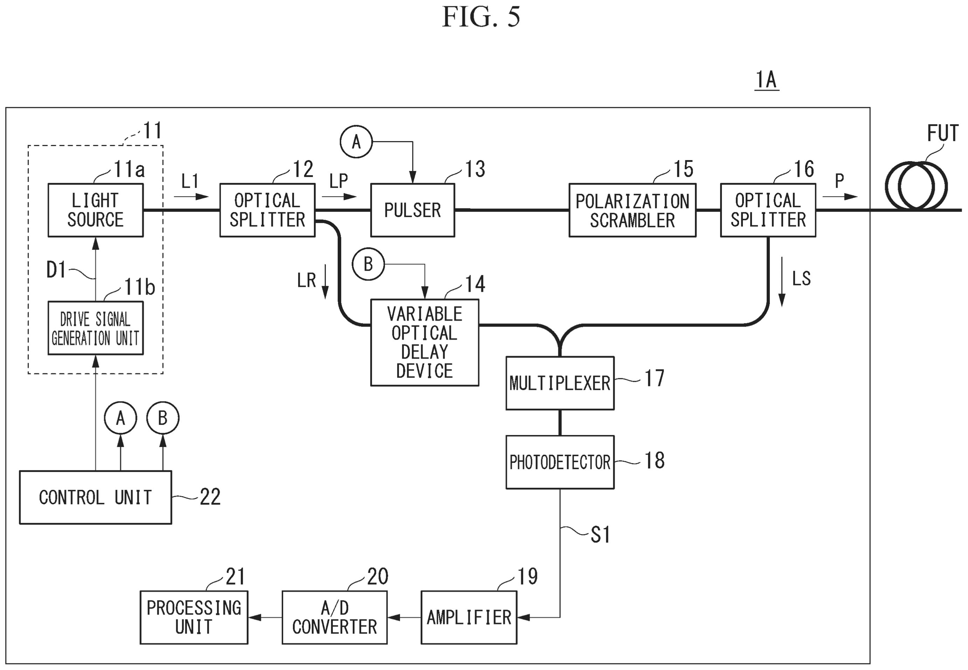

FIG. 5 is a block diagram showing a modification example of an optical fiber characteristic measuring device according to the first embodiment of the present disclosure. As shown in FIG. 5, an optical fiber characteristic measuring device 1A of the present embodiment has a constitution almost similar to that of the optical fiber characteristic measuring device 1 shown in FIG. 2, but differs in that the variable optical delay device 14 is provided on an optical path of the reference light LR, not on the optical path of the pump pulse light P.

Namely, in the optical fiber characteristic measuring device 1 shown in FIG. 1, the control unit 22 performs control to change the position of the correlation peak PK by adjusting the amount of delay of the pump pulse light P incident on the measurement target optical fiber FUT without changing the modulation frequency fₘ. In contrast, in the optical fiber characteristic measuring device 1A of the present modification example, the control unit 22 performs control to change the position of the correlation peak PK by adjusting the amount of delay of the reference light LR used for detecting the Brillouin scattered light LS without changing the modulation frequency fₘ.

The optical fiber characteristic measuring device 1 shown in FIG. 1 and the optical fiber characteristic measuring device 1A of the present modification example shown in FIG. 5 simply differ in whether the amount of delay of the pump pulse light P is adjusted or the amount of delay of the reference light LR is adjusted. For this reason, operation of the optical fiber characteristic measuring device 1A is similar to operation of the optical fiber characteristic measuring device 1. For this reason, description of operation of the optical fiber characteristic measuring device 1A will be omitted.

### [Second embodiment]

### <Optical fiber characteristic measuring device>

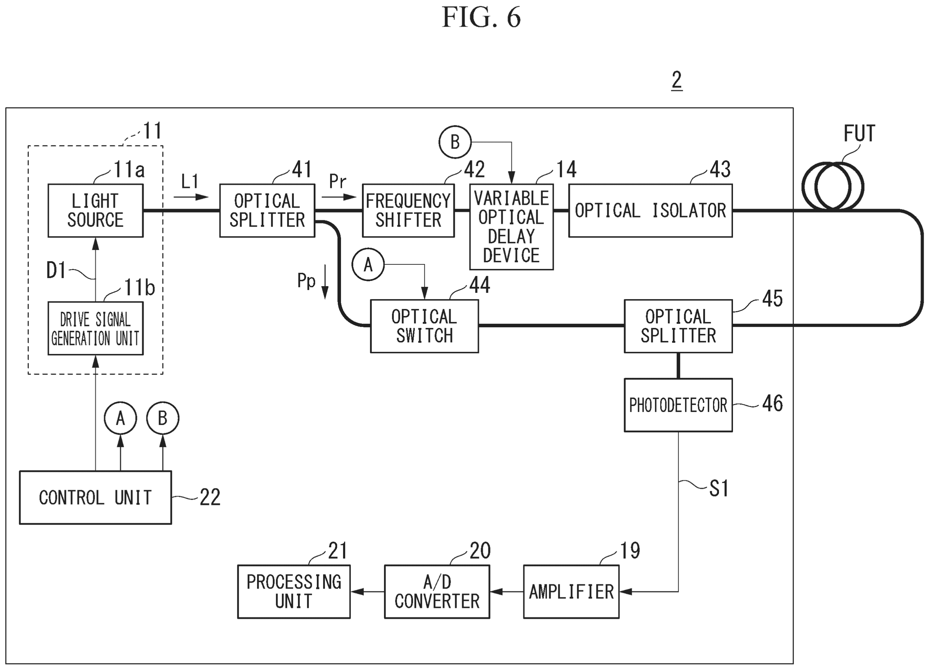

FIG. 6 is a block diagram showing a constitution of a main part of an optical fiber characteristic measuring device according to a second embodiment of the present disclosure. In FIG. 6, the same reference signs are applied to the same constitutions as the constitutions shown in FIGS. 1 and 5. As shown in FIG. 6, an optical fiber characteristic measuring device 2 of the present embodiment has a constitution in which the optical splitter 12, the pulser 13, the polarization scrambler 15, the optical splitter 16, the multiplexer 17, and the photodetector 18 of the optical fiber characteristic measuring device 1 shown in FIG. 1 are omitted, and an optical splitter 41 (third optical splitter), a frequency shifter 42, an optical isolator 43, an optical switch 44, an optical splitter 45 (fourth optical splitter), and a photodetector 46 are provided.

The optical fiber characteristic measuring device 1 shown in FIG. 1 and the optical fiber characteristic measuring device 1A shown in FIG. 5 are optical fiber characteristic measuring devices based on a so-called BOCDR method, causing the pump pulse light P to be incident from one end of the measurement target optical fiber FUT and measuring the characteristics of the measurement target optical fiber FUT on the basis of the Brillouin scattered light LS obtained from the one end thereof. In contrast, the optical fiber characteristic measuring device 2 of the present embodiment is an optical fiber characteristic measuring device based on a so-called BOCDA method, causing pump light Pp to be incident from one end of the measurement target optical fiber FUT, causing probe light Pr to be incident from the other end of the measurement target optical fiber FUT, and measuring the characteristics of the measurement target optical fiber FUT on the basis of the Brillouin scattered light obtained from the one end thereof.

The optical splitter 41 splits the laser light L1 output from the light source unit 11 into the probe light Pr (second split light) and the pump light Pp (first split light) having an intensity ratio (for example, 1:1) which has been defined in advance.

The frequency shifter 42 is provided between the optical splitter 41 and the variable optical delay device 14 and shifts the frequency of the probe light Pr split by the optical splitter 41 (light caused to be incident on the measurement target optical fiber). Specifically, for example, the frequency shifter 42 includes a single side band (SSB) modulation element, shifting the frequency of the probe light Pr by an amount corresponding to the amount of the Brillouin frequency shift (for example, approximately 11 GHz). The frequency shifter 42 shifts the frequency of the probe light Pr in order to amplify the probe light Pr by means of an induced Brillouin scattering phenomenon at a position where modulation phases of the probe light Pr and the pump light Pp coincide (position where the correlation peak appears).

The optical isolator 43 is provided between the variable optical delay device 14 and the other end of the measurement target optical fiber FUT and causes to the probe light Pr which has passed through the variable optical delay device 14 to be input to the other end of the measurement target optical fiber FUT. However, the optical isolator 43 blocks light output from the other end of the measurement target optical fiber FUT toward the variable optical delay device 14.

Under the control of the control unit 22, the optical switch 44 switches whether or not to output the pump light Pp split by the optical splitter 12. Similar to the optical splitter 16 shown in FIGS. 1 and 5, the optical splitter 45 includes the first port, the second port, and the third port. The first port is connected to the optical switch 44. The second port is connected to one end of the measurement target optical fiber FUT. The third port is connected to the photodetector 46. The optical splitter 45 outputs the pump light Pp input through the first port to the second port. In addition, light from the measurement target optical fiber FUT input through the second port is output to the third port. For example, an optical circulator can be used as such an optical splitter 45.

For example, the photodetector 46 includes a highly sensitive light reception element such as an Avalanche photodiode, detecting light output through the third port of the optical splitter 45. Here, from one end of the measurement target optical fiber FUT, the probe light Pr which has been incident from the other end of the measurement target optical fiber FUT and has passed through the measurement target optical fiber FUT and the Brillouin scattered light generated inside the measurement target optical fiber FUT are output. For this reason, the photodetector 46 detects the probe light Pr and the Brillouin scattered light output from one end of the measurement target optical fiber FUT.

The optical fiber characteristic measuring device 2 of the present embodiment has a measurement principle different from those of the optical fiber characteristic measuring device 1 shown in FIG. 1 and the optical fiber characteristic measuring device 1A shown in FIG. 5, but the detection signal S1 output from the photodetector 46 is approximately similar to the detection signal S1 obtained in the first embodiment. For this reason, in the present embodiment as well, a Brillouin gain spectrum similar to that in the first embodiment can be obtained.

In the present embodiment, the laser light L1 subjected to frequency modulation is split into the pump light Pp and the probe light Pr, the frequency of the probe light Pr is shifted, and the probe light Pr is delayed by a predetermined amount of delay. Further, the pump light Pp is caused to be incident from one end of the measurement target optical fiber FUT, and the probe light Pr is caused to be incident from the other end of the measurement target optical fiber FUT.

Inside the measurement target optical fiber FUT, the probe light Pr is amplified by means of an induced Brillouin scattering phenomenon at a position where the modulation phases of the probe light Pr and the pump light Pp coincide (position where the correlation peak appears). The Brillouin scattered light or the like output from one end of the measurement target optical fiber FUT is detected by the photodetector 46.

Further, control to change the position of the correlation peak PK is performed by adjusting the amount of delay of the probe light Pr incident on the measurement target optical fiber FUT without changing the modulation frequency fₘ. In this manner, in the present embodiment as well, measurement can be performed while changing the position z of the measurement point without changing the modulation frequency fₘ of laser light.

In the present embodiment, the variable optical delay device 14 is provided on the optical path of the probe light Pr, and control to change the position of the correlation peak PK is performed by adjusting the amount of delay of the probe light Pr incident on the measurement target optical fiber FUT. However, the variable optical delay device 14 may be provided on the optical path of the pump light Pp, and control to change the position of the correlation peak PK may be performed by adjusting the amount of delay of the pump light Pp incident on the measurement target optical fiber FUT.

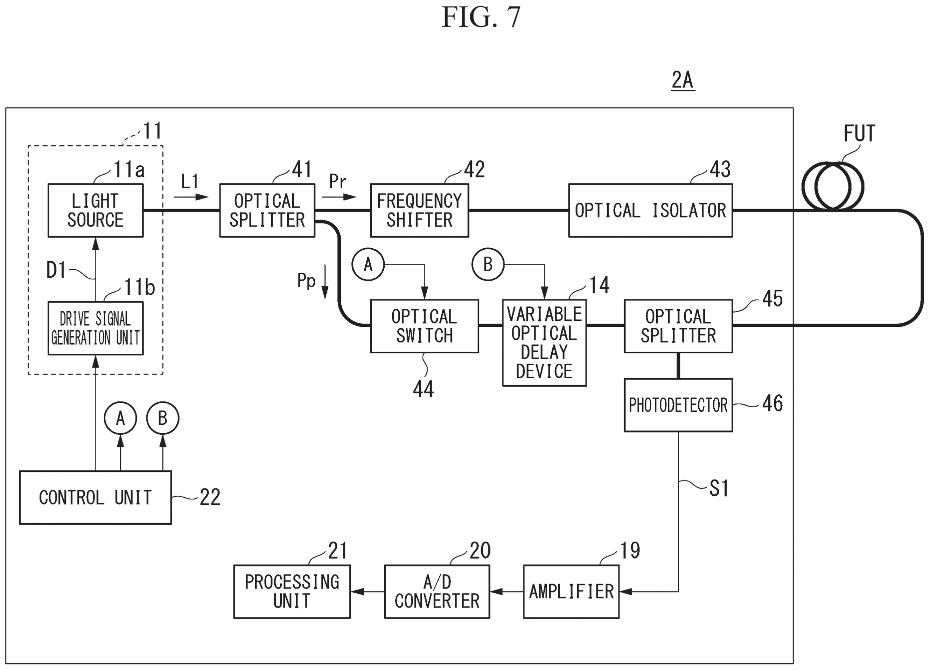

FIG. 7 is a block diagram showing a modification example of an optical fiber characteristic measuring device according to the second embodiment of the present disclosure. As shown in FIG. 7, an optical fiber characteristic measuring device 2A of the present embodiment has a constitution almost similar to that of the optical fiber characteristic measuring device 2 shown in FIG. 6, but differs in that the variable optical delay device 14 is provided on the optical path of the pump light Pp, not on the optical path of the probe light Pr.

Namely, in the optical fiber characteristic measuring device 2 shown in FIG. 6, the control unit 22 performs control to change the position of the correlation peak PK by adjusting the amount of delay of the probe light Pr incident on the measurement target optical fiber FUT without changing the modulation frequency fₘ. In contrast, in the optical fiber characteristic measuring device 2A of the present modification example, the control unit 22 performs control to change the position of the correlation peak PK by adjusting the amount of delay of the pump light Pp incident on the measurement target optical fiber FUT without changing the modulation frequency fₘ.

The optical fiber characteristic measuring device 2 shown in FIG. 6 and the optical fiber characteristic measuring device 2A of the present modification example shown in FIG. 7 simply differ in whether the amount of delay of the probe light Pr is adjusted or the amount of delay of the pump light Pp is adjusted. For this reason, operation of the optical fiber characteristic measuring device 2A is similar to operation of the optical fiber characteristic measuring device 2. For this reason, description of operation of the optical fiber characteristic measuring device 2A will be omitted.

### [Third embodiment]

### <Optical fiber characteristic measuring device>

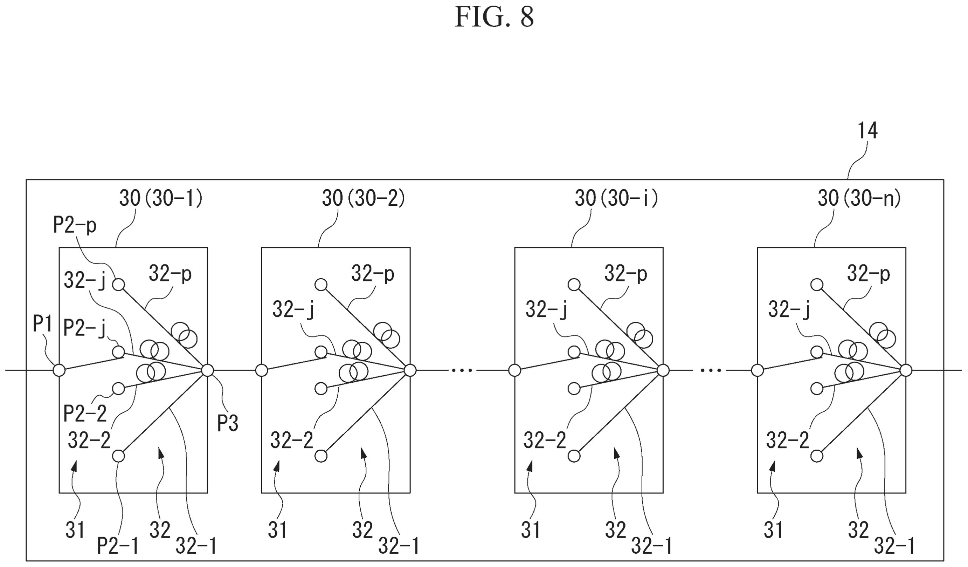

An optical fiber characteristic measuring device of the present embodiment may be the optical fiber characteristic measuring device 1 shown in FIG. 1 or the optical fiber characteristic measuring device 1A shown in FIG. 5, or it may be the optical fiber characteristic measuring device 2 shown in FIG. 6 or the optical fiber characteristic measuring device 2A shown in FIG. 7. The optical fiber characteristic measuring device of the present embodiment includes the variable optical delay device 14 shown in FIG. 8 in place of the variable optical delay device 14 shown in FIG. 2.

### <Variable optical delay device>

FIG. 8 is a block diagram showing a constitution of a main part of the variable optical delay device according to a third embodiment of the present disclosure. In FIG. 8, the same reference signs are applied to constitutions corresponding to the constitutions shown in FIG. 2. As shown in FIG. 8, similar to the variable optical delay device 14 shown in FIG. 2, the variable optical delay device 14 of the present embodiment includes n modules 30-1 to 30-n subjected to cascade connection with a switchable amount of delay.

Similar to the modules 30 shown in FIG. 2, the modules 30 includes the optical switch 31 and a plurality of optical fibers 32. However, the optical switch 31 shown in FIG. 8 differs from the optical switch 31 shown in FIG. 2 in the number of output ports, and the optical fibers 32 shown in FIG. 8 differ from the optical fibers 32 shown in FIG. 2 in the number thereof.

Specifically, the optical switch 31 shown in FIG. 8 includes one input port P1 and p (p is an integer equal to or larger than 2) output ports P2-1 to P2-p. Under the control of the control unit 22, the optical switch 31 shown in FIG. 8 switches the output port of the p output ports P2-1 to P2-p connected to the input port P1.

The optical fibers 32 shown in FIG. 8 are optical fibers having lengths different from each other. In the example shown in FIG. 8, the p optical fibers 32-1 to 32-p are provided as the optical fibers 32. The optical fiber 32-1 is connected between the output port P2-1 of the optical switch 31 and the output port P3 of the module 30, and the optical fiber 32-2 is connected between the output port P2-2 of the optical switch 31 and the output port P3 of the module 30. In addition, the optical fiber 32-p is connected between the output port P2-p of the optical switch 31 and the output port P3 of the module 30.

Similar to the variable optical delay device 14 shown in FIG. 2, for example, the lengths and the differences between the optical fibers 32-1 to 32-p are set in consideration of the minimum spatial resolution Δz of the optical fiber characteristic measuring device 1 in the length direction of the measurement target optical fiber FUT. In FIG. 8, similar to FIG. 2, for the sake of convenience, the optical fibers provided in each of the modules 30-1 to 30-n are indicated as "optical fibers 32-1, 32-2, and so on to 32-n", but it should be noted that the optical fibers 32-1, 32-2, and so on to 32-n provided in the modules 30-1 to 30-n have lengths different from each other.

Specifically, an optical path length L(i,j) of the jth (j is an integer satisfying 0≤j≤p-1) optical fiber provided in the ith module 30 in a direction in which the pump pulse light P passes through is expressed by the following Expression (7). $L \left(i, j\right) = {p}^{i} ⋅ j ⋅ Δz + L \left(i, 0\right)$

The final term on the right side of the foregoing Expression (7), namely, the optical path length L(i,0) of the 0th optical fiber provided in the ith module 30, is expressed by the following Expression (8). $L \left(i, 0\right) = {p}^{i} ⋅ Δz + L \left(0, 0\right)$

In addition, the maximum optical path length difference ΔLᵢ between the optical fibers 32-1 to 32-p provided in the ith module 30 is expressed by the following Expression (9). ${ΔL}_{i} = {p}^{i} \left(p-1\right) Δz$

FIG. 8 in the example shown in, the maximum optical path length difference ΔL₀ between the optical fibers 32-1 to 32-p provided in the module 30-1 is (p-1)Δz, and the maximum optical path length difference ΔL₁ between the optical fibers 32-1 to 32-p provided in the module 30-2 is p(p-1)Δz. In addition, the optical path length difference ΔLₙ between the optical fibers 32-1 to 32-p provided in the module 30-n is pⁿ(p-1)Δz. Namely, since the ith module 30-i is the ith digit of a p-adic number, the amount of delay of the variable optical delay device 14 can be adjusted at intervals of the minimum spatial resolution Δz by switching the optical switch 31 of each of the modules 30.

In addition, the sum Δzₘₐₓ of the optical path length differences (maximum optical path length differences) between the modules 30-1 to 30-n provided in the variable optical delay device 14 shown in FIG. 8 is expressed by the following Expression (10). ${Δz}_{max} = \left({p}^{n}-1\right) Δz$

As described using FIG. 3A, when the characteristics are measured throughout the entire measurement target optical fiber FUT by generating a single correlation peak PK, there is a need for the sum Δzₘₐₓ of the optical path length differences between the modules 30-1 to 30-n provided in the variable optical delay device 14 twice the length L_{FUT} of the measurement target optical fiber FUT. For this reason, in the variable optical delay device 14 shown in FIG. 8, there is a need to determine the number n of modules 30 such that the following Expression (11) is satisfied. ${Δz}_{max} = \left({p}^{n}-1\right) Δz > 2 {L}_{FUT}$

As described using FIG. 3B, when the characteristics are measured throughout the entire measurement target optical fiber FUT by generating a plurality of correlation peaks PK, there is a need for the sum Δzₘₐₓ of the optical path length differences between the modules 30-1 to 30-n provided in the variable optical delay device 14 to be longer than twice the interval dₘ between the correlation peaks PK. For this reason, in the variable optical delay device 14 shown in FIG. 8, there is a need to determine the number n of modules 30 provided in the variable optical delay device 14 such that the following Expression (12) is satisfied. ${Δz}_{max} = \left({p}^{n}-1\right) Δz > 2 {d}_{m}$

Hereinabove, the optical fiber characteristic measuring device, the optical fiber characteristic measuring method, and the variable optical delay device according to the embodiments of the present disclosure have been described, but the present disclosure is not limited to the foregoing embodiments and can be freely changed within the scope of the present disclosure. For example, in the embodiments described above, a BOCDR-type optical fiber characteristic measuring device and a BOCDA-type optical fiber characteristic measuring device have been described, but the present disclosure can also be applied to devices other than BOCDR-type optical fiber characteristic measuring devices and BOCDA-type optical fiber characteristic measuring devices.

Specifically, the present disclosure can be applied to devices which acquire a Brillouin gain spectrum, analyze the acquired Brillouin gain spectrum, and perform processing of obtaining the amount of a Brillouin frequency shift. Examples of such devices include Brillouin optical time domain reflectometry (BOTDR) type optical fiber characteristic measuring devices, and Brillouin optical time domain analysis (BOTDA) type optical fiber characteristic measuring devices.

## Claims

1. An optical fiber characteristic measuring device comprising:
a light source configured to emit laser light modulated at a predetermined modulation frequency;
a photodetector configured to detect Brillouin scattered light obtained by causing the laser light to be incident on a measurement target optical fiber; and
a control unit configured to perform control to change a position of a correlation peak by adjusting an amount of delay of the laser light used for detecting the laser light incident on the measurement target optical fiber or the Brillouin scattered light without changing the modulation frequency.

2. The optical fiber characteristic measuring device according to claim 1, further comprising:
a variable optical delay device provided on an optical path of the laser light used for detecting the laser light incident on the measurement target optical fiber or the Brillouin scattered light,
wherein the control unit is configured to perform control to change the position of the correlation peak by adjusting the amount of delay of the variable optical delay device.

3. The optical fiber characteristic measuring device according to claim 2,
wherein the variable optical delay device comprises n (n is an integer equal to or larger than 2) modules subjected to cascade connection with a switchable amount of delay, and
wherein the control unit is configured to adjust the amount of delay of the variable optical delay device by switching the amount of delay of each of the modules.

4. The optical fiber characteristic measuring device according to claim 3,
wherein each of the modules comprises:
a plurality of optical fibers having lengths different from each other; and
an optical switch configured to switch the optical fiber of the plurality of optical fibers allowing the laser light to pass therethrough.

5. The optical fiber characteristic measuring device according to claim 4,
wherein each of the modules is provided with p (p is an integer equal to or larger than 2) optical fibers, and
wherein when a minimum spatial resolution of the measurement target optical fiber in a length direction is Δz, an optical path length L(i,j) of the jth (j is an integer satisfying 0≤j≤p-1) optical fiber provided in the ith (i is an integer satisfying 0≤i≤n-1) module is expressed by the following expression. $L \left(i, j\right) = {p}^{i} ⋅ j ⋅ Δz + L \left(i, 0\right)$

6. The optical fiber characteristic measuring device according to claim 4 or 5,
wherein a sum of maximum optical path length differences of the optical fibers in each of the modules is longer than twice a length of the measurement target optical fiber.

7. The optical fiber characteristic measuring device according to claim 4 or 5,
wherein a sum of maximum optical path length differences of the optical fibers in each of the modules is longer than twice an interval between the correlation peaks.

8. The optical fiber characteristic measuring device according to claim 1, further comprising:
a first optical splitter is configured to split the laser light into pump light and reference light; and
a second optical splitter is configured to cause the pump light to be incident from one end of the measurement target optical fiber and output the Brillouin scattered light generated inside the measurement target optical fiber,
wherein the photodetector is configured to detect coherent light between the Brillouin scattered light and the reference light, and
wherein the control unit is configured to perform control to change the position of the correlation peak by adjusting the amount of delay of the pump light or the reference light.

9. The optical fiber characteristic measuring device according to claim 1, further comprising:
a third optical splitter is configured to split the laser light into pump light and probe light;
a shifter is configured to shift a frequency of the pump light or the probe light; and
a fourth optical splitter is configured to cause the pump light to be incident from one end of the measurement target optical fiber and output the probe light which has been incident from the other end of the measurement target optical fiber and has passed through the measurement target optical fiber and the Brillouin scattered light generated inside the measurement target optical fiber,
wherein the photodetector is configured to detect the probe light and the Brillouin scattered light output from the fourth optical splitter, and
wherein the control unit is configured to perform control to change the position of the correlation peak by adjusting the amount of delay of the pump light or the probe light.

10. The optical fiber characteristic measuring device according to claim 1, further comprising:
a processing unit is configured to obtain a Brillouin gain spectrum from a detection signal output from the photodetector, and measure characteristics of the measurement target optical fiber on the basis of the Brillouin gain spectrum.

11. An optical fiber characteristic measuring method comprising:
a step of emitting laser light modulated at a predetermined modulation frequency;
a step of detecting Brillouin scattered light obtained by causing the laser light to be incident on a measurement target optical fiber; and
a step of performing control to change a position of a correlation peak by adjusting an amount of delay of the laser light used for detecting the laser light incident on the measurement target optical fiber or the Brillouin scattered light without changing the modulation frequency.

12. A variable optical delay device comprising:
n (n is an integer equal to or larger than 2) modules subjected to cascade connection with a switchable amount of delay of light,
wherein each of the modules comprises:
p (p is an integer equal to or larger than 2) optical fibers having lengths different from each other; and
an optical switch configured to switch the optical fiber of the p optical fibers allowing light to pass therethrough, and
wherein when a predetermined reference length is Δz, an optical path length L(i,j) of the jth (j is an integer satisfying 0≤j≤p-1) optical fiber provided in the ith (i is an integer satisfying 0≤i≤n-1) module is expressed by the following expression. $L \left(i, j\right) = {p}^{i} ⋅ j ⋅ Δz + L \left(i, 0\right)$
